# NEUE EUROPÄISCHE PATENTSCHRIFT

(11) **EP 0 893 301 B2**
(45) Veröffentlichungstag und Bekanntmachung des Hinweises auf die Entscheidung über den Einspruch: **19.10.2005**
(45) Hinweis auf die Patenterteilung: 02.10.2002
(21) Anmeldenummer: 98109246.3
(22) Anmeldetag: 20.05.1998
(51) Int. Cl.: B60N 2/44

(54) **Sitzbezüge für Autositze**
Seat cover for car seats.
Revêtement de sièges de véhicules automobiles

(30) Priorität: 21.07.1997 DE 29712869 U; 24.07.1997 DE 29713195 U; 24.07.1997 DE 29713196 U
(43) Veröffentlichungstag der Anmeldung: 27.01.1999
(73) Patentinhaber: Diana KFZ-Textil GmbH, 92660 Neustadt (DE)
(72) Erfinder: Unger, Angelika, 92660 Neustadt (DE)
(74) Vertreter: Hennicke, Ernst Rüdiger

(56) Entgegenhaltungen:
- DE-U- 29 620 382
- DE-U- 29 704 593
- US-A- 5 588 671

## Beschreibung

Die Erfindung betrifft Sitzbezüge für Autositze mit integrierten Seitenairbags, bestehend aus Lehnenbezügen und Sitzbezügen, sogenannten Schonbezügen, die auf ihren den Fahrzeugtüren zugewandten Seiten Sollbruchstellen für in der Lehne bzw. in dem Sitz befindliche Seitenairbags aufweisen, deren Festigkeit so ausgelegt ist, daß für den Fall, daß solche Sollbruchstellen von Reißnähten gebildet werden, diese beim Explodieren des Airbags aufreißen und den Airbag ungehindert aus der betreffenden Seitenbacke der Lehne bzw. des Sitzes austreten lassen, wobei sich die Nähte entlang der Seitenbackenbegrenzungskante der Lehne und des Sitzes erstrecken. Derartige Autositzbezüge sind aus dem Gbm 297 04 593 (dem Oberbegriff des Anspruchs 1 entsprechend) bekannt.

Um die Seitenairbags nicht in ihrer Funktion zu behindern, werden die Bezüge für die Sitze des jeweiligen Fahrzeugtyps so maßgeschneidert, daß in dem Teil des Bezugs, der sich an der Seitenbacke von Lehne und Sitz eines Seriensitzes befindet, eine Reißnaht definierter Länge angeordnet ist, die beim Explodieren und damit Aufblasen des Airbags aufreißt, um den Seitenairbag ungehindert austreten zu lassen und damit ein kontrolliertes Aufreißen der Sitzbezüge zu ermöglichen und eine Zerstörung der Bezüge bzw. der Sitze und Lehnen selbst zu vermeiden.

Derartige Sitzbezüge, wobei dieser Begriff auch Lehnenüberzüge umfassen soll, sind jedoch mit Nachteilen behaftet. So hat sich gezeigt, daß die bisher verwendeten Reißnähte hinsichtlich ihrer Länge, die durch an den Nahtenden befindliche Einschnitte begrenzt war, den Anforderungen bezüglich eines schnellen und ungehinderten Aufblasens der Airbags nicht unbedingt genügen, und zwar insbesondere dann nicht, wenn der Sitz komplizierte Konturen aufweist. Desweiteren ist die Verwendung von Reißnähten bei Überzügen, die aus bestimmten Stoffen bestehen, beispielsweise aus Velourstoff, problematisch.

Aus dem GM 296 20 382 ist zwar auch bereits ein Schonbezug für einen ein- oder mehrteiligen Kraftfahrzeugsitz bekannt, der den Sitzteil und Rückenlehnenteil bedeckt, in deren Seitenpolster mindestens ein Seitenairbag integriert ist, der durch einen Spalt im Polster im Falle einer starken Stoßbelastung aufgeblasen wird und austritt. Dieser Spalt wird jedoch durch eine absprengbare Abdeckung oder lösbare Überlappung des Bezugsstoffes verdeckt oder ist sogar sichtbar, wobei jedoch im Falle des Aufsprengens der Abdeckung bzw. des sichtbaren Spaltes der Austritt des aufgeblasenen Airbags erfahrungsgemäß einen nicht vorhersehbaren Wegnehmen kann, weil einerseits die lösbare Überlappung des Bezugsstoffs beim Aufsprengen ein Ausbreitungshindemis für den Airbag bildet und andererseits bei nichtvorhandener Überlappung die den Schlitz zusammenhaltenden Reißfäden auf Grund der Umfangsbegrenzung des Schlitzes diesen nicht weit genug öffnen, um jegliches Ausbreitungshindernis für den Airbag zu beseitigen und dennoch eine gezielte wirksame Ausbreitung zu ermöglichen.

Die Aufgabe der Erfindung besteht deshalb darin, die Reißnähte so auszubilden, daß der genannte Nachteil vermieden wird und die Funktionsfähigkeit der Airbags sichergestellt wird.

Zur Lösung der Erfindungsaufgabe wird vorgeschlagen, den Lehnenüberzug und der Sitzüberzug im Bereich der Begrenzungskanten der Seitenbacken über annähernd die gesamte Länge der Lehnenseite bzw. Sitzseite mit je einer Öffnung zu versehen, die durch mehrere über die Länge der Öffnung verteilte Klettbänder geschlossen haltbar ist, welche quer zur Öffnung angeordnet sind.

Zwar sind Klettverschlußelemente in diesem Zusammenhang aus dem Gbm 296 20 382 bekannt geworden, jedoch kommt es auf eine besondere Anordnung und Ausbildung dieser Elemente an, um die Wirksamkeit des Airbags nicht zu beeinträchtigen.

Eine vorteilhafte Ausgestaltung der Erfindung ist in dem Unteranspruch gekennzeichnet.

Die Erfindung wird nachfolgend an Hand der in der Zeichnung dargestellten Ausführungsbeispiele näher erläutert. In der Zeichnung zeigen:
- Fig. 1: eine perspektivische Seitenansicht eines Fahrzeugsitzes, bei dem der Lehnenüberzug und der Sitzüberzug mit sich über die Länge der Lehnenseite bzw. Sitzseite erstreckenden, abgedeckten Öffnungen versehen sind, unterhalb derer sich die Airbags im Sitzpolster befinden und
- Fig. 2: eine der Fig. 1 vergleichbare perspektivische Seitenansicht des Fahrzeugsitzes, bei der die Öffnungen in den Sitzbezügen nicht überlappt sind.

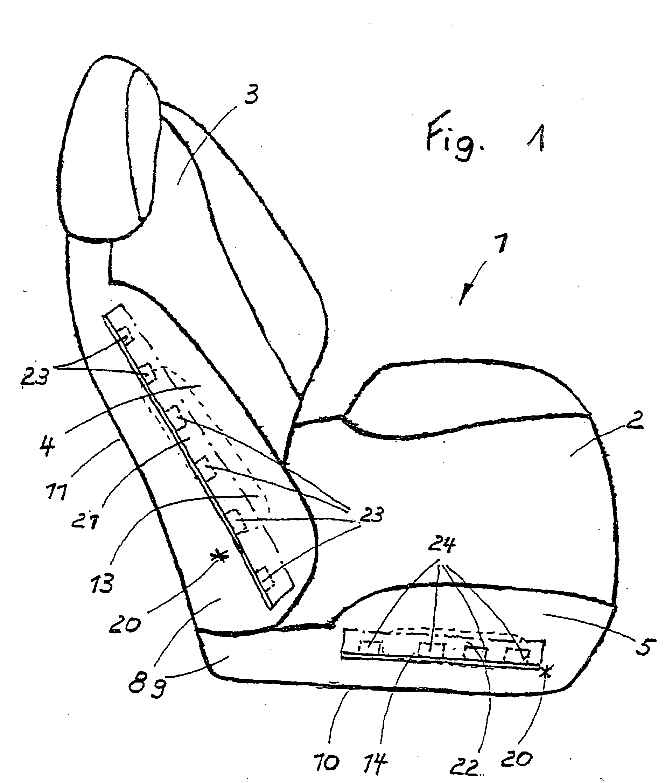

Der in Fig. 1 gezeigte Autositz 1 ist der rechte Fahrzeugvordersitz, was bedeutet, daß die Seitenairbags 13, 14, die in der Zeichnung gestrichelt dargestellt sind, sich auf der der Fahrzeugtür zugewandten Seite des Sitzes 10 bzw. der Lehne 11 innerhalb der diesbezüglichen Seitenbacken 4, 5 der Sitzpolsterung befinden.

Da die Sitzbezüge 2, über dem Sitz 10 bzw. der Lehne 11 separate Einzelteile sind, werden sie, um Verwechslungen bei der Montage zu vermeiden sichtbar gekennzeichnet, beispielsweise mittels eines Symbols, das in der Zeichnung durch ein sternartiges Gebilde 20 dargestellt ist und beispielsweise in den Bezugsstoff eingestickt sein kann, um ein unbeabsichtigtes Ablösen zu vermeiden. Anstelle eines solchen Symbols wird auch das Wort "Airbag" verwendet.

Damit die Seitenairbags beim explosionsartigen Aufblasen ungehindert aus den Seitenbacken 4, 5 austreten können, ist der Bezugsstoff 8, 9 der beiden Überzüge mit je einer Öffnung versehen, die sich über annähernd die gesamte Länge des Sitzes 10 bzw. der Lehne 11 erstreckt und durch eine Überlappung 21, 22 des Bezugsstoffes abgedeckt wird. Diese Überlappung 21, 22 ist ca. 30 mm breit und auf ihrer Innenseite mit mehreren über die Länge der Öffnungen verteilten Klettbändem 23, 24 versehen, die die Öffnung normalerweise geschlossen halten und sich quer zu den Öffnungsrändem erstrecken. Für den Fall, daß sich die Airbags 13, 14, die sich unterhalb der genannten Öffnungen befinden, explosionsartig aufblasen und den Polsterungsbezugsstoff von Sitz 10 und Lehne 11 durchstoßen, indem sie die die Polsterungsbezugsstoffe an den betreffenden Stellen zusammenhaltenden Nähte zerreißen, werden sie von dem Sitzüberzug 2 und Lehnenüberzug 3, der auch ein Velourstoff sein kann, welcher unter Umständen mit einem Baumwollstoff unterfüttert ist, an ihrerweiteren Entfaltung dadurch nicht gehindert, daß die Klettbänder 23, 24 ohne weiteres abreißen. Dadurch werden die Überlappungen 21, 22 ohne weiteres weggedrückt, so daß die Airbags aus den vorhandenen Öffnungen austreten können. Die Öffnungen erstrecken sich dort, wo die Originalnähte der Polsterungen des Fahrzeugsitzes 1 verlaufen.

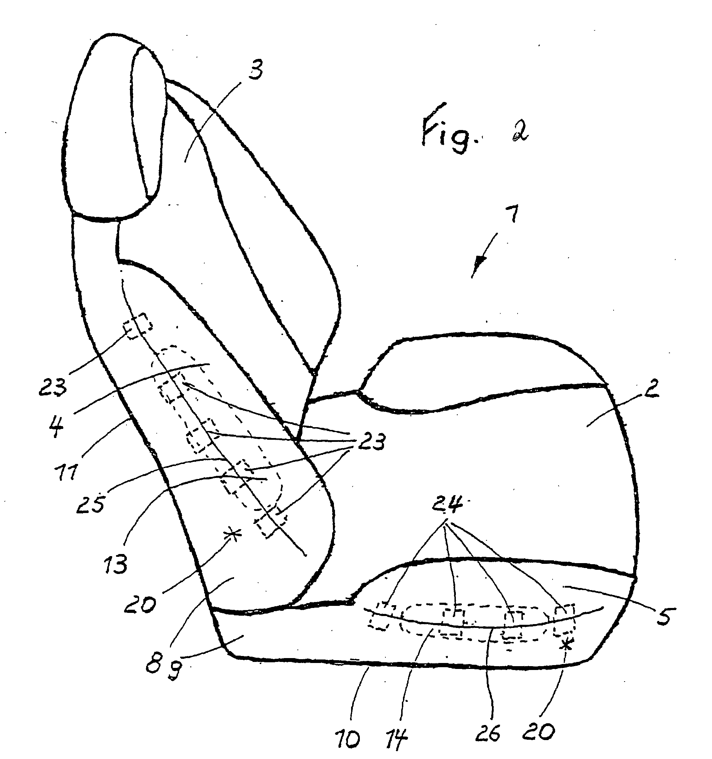

Die in Fig. 2 dargestellte Ausführungsform zeigt einen Sitzüberzug für einen Fahrzeugsitz 1, der wiederum dem Fahrzeugsitz 1 von Fig. 1. entspricht, so daß die entsprechenden Bezugszeichen auch für diesen Sitz Verwendung finden. Bei dieser Ausführungsform sind jedoch die im Sitzüberzug 2 und Lehnenüberzug 3 vorgesehenen Öffnungen, unterhalb derer sich die Seitenairbags 13, 14 innerhalb der Polsterung befinden, nicht mit einer Überlappung versehen, sondern werden ohne eine solche durch mehrere über die Länge der Öffnungen verteilte Klettbänder 23, 24 geschlossen gehalten, wobei sie sich quer zu den Öffnungsrändern erstrecken.

Für den Fall, daß sich die Airbags 13, 14 explosionsartig aufblasen und den Polsterungsstoff von Sitz 10 und Lehne 11 durchstoßen, sprengen sie ohne weiteres auch die im geschlossenen Zustand der Öffnungen nur als Schlitze 25, 26 in Erscheinung tretenden Öffnungen auf, indem die Klettverschlüsse 23, 24 aufgerissen werden. Dadurch können sich die Airbags ungehindert entfalten.

## Patentansprüche

1. Sitzbezüge für Autositze mit integriertem Seitenairbags (13, 14), bestehend aus maßgeschneiderten Lehnenbezügen und Sitzbezügen, sogenannten Schonbezügen, die auf ihren den Fahrzeugtüren zugewandten Seiten Sollbruchstellen für in der Lehne bzw. in dem Sitz befindliche Seitenairbags (13, 14) aufweisen, deren Festigkeit so ausgelegt ist, daß für den Fall, daß solche Sollbruchstellen von Reißnähten (6, 7) gebildet werden, diese beim Explodieren des Airbags aufreißen und den Airbag ungehindert aus der betreffenden Seitenbacke der Lehne bzw des Sitzes austreten lassen, wobei sich die Nähte entlang der Seitenbackenbegrenzungskante der Lehne und des Sitzes erstrecken, **dadurch gekennzeichnet, daß** der Lehnenüberzug (3) und der Sitzüberzug (2) im Bereich der Begrenzungskanten der Seitenbacken (4, 5) über annähernd die gesamte Länge der Lehnenseite bzw. Sitzseite mit je einer Öffnung versehen sind, die durch mehrere über die Länge der Öffnung verteilte Klettbänder (23, 24) geschlossen haltbar ist, welche quer zur Öffnung angeordnet sind.

2. Sitzbezüge nach Anspruch 1, **dadurch gekennzeichnet, daß** zur Vermeidung von Montagefehlem bei der Montage der Sitzbezüge/Schonbezüge die den Sitzen (10) und deren Lehnen (11) zugeordneten Bezüge (2, 3) des rechten und linken Fahrzeugvordersitzes (1) sichtbar **gekennzeichnet** sind.

## Claims

1. Seat covers for car seats with integrated side air bags (13,14), consisting of made-to-measure backrest covers and seat covers, so-called protective covers, which comprise, on the sides facing the vehicle doors, predetermined breaking points for side air bags (13, 14) in the backrest or in the seat, the rigidity of which is arranged in such a manner that, in the case that the predetermined breaking points are formed by tear seams (6, 7), these tear open during the explosion of the air bags and let the air bag exit from the corresponding side wing of the backrest or of the seat in an unimpeded manner, whereby the seams extend along the boundary edge of the side wings of the backrest and the seat, **characterised in that** the backrest cover (3) and the seat cover (2) are provided with an opening along approximately the entire length of the backrest side or the seat side which is held in a closed position by several Velcro tapes (23, 24) which are distributed transversely along the opening.

2. Seat covers according to 1, **characterised in that** the covers (2, 3) of the right and left vehicle front seats (1) assigned to the seats (10) and backrests (11) are marked visibly for avoiding mounting errors during the mounting thereof.

## Revendications

1. Housses de siège pour sièges d'automobiles avec coussins gonflables latéraux (13, 14) intégrés, comprenant des housses de dossier et housses de siège appelées housses, faites sur mesure, qui présentent sur leurs côtés tournés vers les portes du véhicule des points de rupture pour des coussins gonflables latéraux (13, 14) se trouvant dans le dossier ou dans le siège, dont la résistance est conçue de sorte que, dans le cas où de tels points de rupture sont constitués par des coutures de déchirement (6, 7), celles-ci se déchirent brusquement lors de l'explosion du coussin gonflable et laissent sortir le coussin gonflable librement de la joue latérale concernée du dossier ou du siège, les coutures s'étendant le long du bord de délimitation de la joue latérale du dossier et du siège, **caractérisées en ce que** la housse 20 de dossier (3) et la housse de siège (2) sont pourvues chacune, dans la zone des bords de délimitation des joues latérales (4, 5) sur approximativement toute la longueur du côté du dossier ou du côté du siège, d'une ouverture qui peut être maintenue fermée par plusieurs bandes auto-agrippante (23, 24) réparties sur la longueur de l'ouverture, qui sont disposes transversalement par rapport à l'ouverture.

2. Housses de siège selon la revendication 1 **caractérisées en ce que**, pour éviter des erreurs de montage lors du montage des housses de siege/housses, les housses (2, 3) attribuées aux sièges (10) et à leurs dossiers (11) du siège avant droit et du siège avant gauche (1) sont réperées de façon visible.
